(19) **Europäisches Patentamt / European Patent Office / Office européen des brevets**

(11) **EP 0 708 317 B2**

(12) **NOUVEAU FASCICULE DE BREVET EUROPEEN**

Après la procédure d'opposition

(45) Date de publication et mention de la décision concernant l'opposition:
**09.06.2010 Bulletin 2010/23**

(45) Mention de la délivrance du brevet:
**30.01.2002 Bulletin 2002/05**

(51) Int Cl.:
***G01J 5/00*** (2006.01)

(21) Numéro de dépôt: **95402286.9**

(22) Date de dépôt: **13.10.1995**

(54) **Pyromètre bichromatique rapide à fibre optique**

Schnelles bichromatisches fiberoptisches Pyrometer

Rapid fiberoptic bichromatic pyrometer

(84) Etats contractants désignés:
**CH DE ES GB LI**

(30) Priorité: **21.10.1994 FR 9412588**

(43) Date de publication de la demande:
**24.04.1996 Bulletin 1996/17**

(73) Titulaire: **SOCIETE NATIONALE D'ETUDE ET DE CONSTRUCTION DE MOTEURS D'AVIATION "SNECMA"
75015 Paris (FR)**

(72) Inventeurs:
- **Hernandez, Daniel M.**
  **F-66120 Odeillo (FR)**
- **Olalde, Gabriel**
  **F-66120 Odeillo (FR)**
- **Milcent, Emmanuel M.**
  **F-66125 Odeillo (FR)**
- **Clement, Michel**
  **F-27200 Vernon (FR)**

(74) Mandataire: **Thévenet, Jean-Bruno et al
Cabinet Beau de Loménie
158, rue de l'Université
75340 Paris Cédex 07 (FR)**

(56) Documents cités:
**EP-A1- 0 216 458 EP-A1- 0 425 229
WO-A1-91/03715 DE-A- 1 648 233
DE-A1- 4 028 408 DE-C- 2 755 713
DE-C- 3 202 089 GB-A- 2 068 109
GB-A- 2 160 971 GB-A- 2 257 508
US-A- 5 021 980**

- **S. WALTER: 'New Instrumentation for Advanced Turbine Research' MECHANICAL ENGINEERING vol. 105, no. 2, pages 43 - 51, XP000615054**

Remarques:
Le dossier contient des informations techniques présentées postérieurement au dépôt de la demande et ne figurant pas dans le présent fascicule.

## Description

DOMAINE DE L'INVENTION

La présente invention concerne un pyromètre permettant la réalisation de diagnostics thermiques (mesure de températures de gaz ou de surfaces en mouvement) en environnement sévère, avec une très grande rapidité de mesure.

ART ANTERIEUR

Ces conditions d'environnement extrême se trouvent notamment présentes lors des mesures de vitesses de rotation de turbines en fonctionnement, comme celles des turbomachines industrielles, des turbines d'hélicoptères, des turboréacteurs, ou des turbopompes d'alimentation de moteurs cryogéniques de fusées par exemple. Dans ces cas, seule une mesure optique est capable d'analyser le plus finement possible le comportement thermique de ces turbines et de permettre une connaissance précise des propriétés mécaniques des matériaux et de leur évolution en fonction de la température. L'article de Sam Walters "New instrumentation for advanced turbine research" publié dans la revue Mechanical Engineering de février 1983 (vol 105, n°2) décrit très exactement les problèmes posés par ces mesures et présente un bon aperçu des solutions existant actuellement.

Ces solutions présentent cependant encore certains inconvénients. Des erreurs de mesure liées à des problèmes de transmission optique peuvent notamment exister dans des dispositifs utilisant une fibre optique monochromatique pour la capture et le transport du rayonnement thermique émis par la turbine en mouvement. Dans les dispositifs de mesure bichromatique dans lesquels il est nécessaire de procéder à la séparation du faisceau de lumière en sortie de la fibre de transport, il est classique de recourir à un cube séparateur du fait qu'il présente une grande homogénéité avec la fibre. Toutefois, un tel cube est particulièrement sensible aux vibrations et aux éventuels chocs et la répartition du flux lumineux à sa sortie peut alors s'en trouver modifiée. On connaît par la demande européenne EP-A-216458 un pyromètre optique utilisant une fibre optique dont l'énergie lumineuse de sortie est divisée en deux faisceaux élémentaires ce qui limite tant le temps de réponse que la résolution d'un tel pyromètre. Plus simplement des aberrations chromatiques peuvent apparaître lorsque le faisceau en sortie de fibre est mal collimaté (WO-A-91/03715).

Par ailleurs, dans ces dispositifs bichromatiques, le traitement des signaux issus des moyens de séparation est généralement réalisé en temps réel sous une forme analogique à l'aide de composants discrets classiques. Il en résulte des temps de réponse importants (de l'ordre de la milliseconde) et, dans le cas de mesures à fréquences élevées, des contraintes de fonctionnement particulièrement importantes. Ainsi, la stabilisation du dispositif de mesure impose une limitation de la bande passante et en conséquence de la cadence (vitesse) globale de mesure. De même, du fait de sa structure, un tel dispositif reste sensible à tous les phénomènes de dérives en tension ou en température dont la suppression ne peut alors être envisagé qu'au prix de fréquents et fastidieux réglages.

Enfin, la combinaison du système optique à cube séparateur et de l'ensemble électronique analogique précité ne permet pas d'aboutir à un dispositif miniaturisé dont le besoin est pourtant présent notamment dans les systèmes embarqués où un tel dispositif serait utile pour préciser les limites de fonctionnement de turbomoteurs et notamment le contrôle de leurs régimes transitoires.

OBJET DE L'INVENTION

La présente invention a pour but de pallier les inconvénients précités et de proposer un pyromètre particulièrement compact et adapté à des cadences de détection rapides de telle sorte qu'il puisse effectuer de manière continue, dans une large plage de températures, des mesures instantanées de température notamment d'aubes de turbine en rotation.

Ces buts sont atteints avec un pyromètre bichromatique rapide destiné à la mesure de la température T d'un gaz ou d'une surface en mouvement comportant:

- une sonde de mesure placée en regard de la surface ou immergée dans le gaz et captant un rayonnement thermique caractéristique de la température de cette surface ou de ce gaz,

- une fibre optique unique reliée à la sonde de mesure et transmettant ce rayonnement,

- un bloc optique recevant ce rayonnement et comprenant des moyens de collimation d'entrée pour transmettre ce rayonnement, des moyens de séparation formés d'une lame dichroïque pour séparer le rayonnement transmis selon deux bandes de spectrales distinctes, et des moyens de focalisation de sortie pour concentrer les rayonnements séparés,

- un circuit de détection quantique recevant ces rayonnements séparés et assurant leur conversion en deux tensions de couleur Vr, Vb,

- un circuit de traitement recevant ces signaux de tension et comprenant des moyens de conversion analogique-numérique, un processeur de traitement du signal (DSP) calculant à partir de ces valeurs numériques un rapport Vr/Vb et des moyens de mémorisation munis d'une table de valeurs prédéterminées par étalonnage T= f(Vr/Vb) et délivrant en sortie, à partir du rapport calculé, la température T de la surface ou du gaz, le circuit de traitement comportant en outre des moyens de conversion rapide des valeurs Vr et Vb afin d'estimer leur ordre de grandeur et des moyens d'adaptation du niveau d'amplification des signaux Vr et Vb selon les ordres de grandeur délivrés au processeur par les moyens de conversion rapide.

La structure ainsi définie aboutit à l'obtention d'un pyromètre particulièrement compact, avec l'emploi d'une lame dichroïque comme dispositif séparateur, et rapide, par le recours à un processeur de signal combiné avec une mémoire rapide contenant une table de conversion préétablie, permettant notamment la mesure instantanée de la température d'aubes de turbine en rotation.

Pour certaines applications, le déport de la mesure n'est pas indispensable et la mesure peut être faite directement à partir du bloc optique qui sera alors avantageusement muni de moyens de focalisation du rayonnement émis par la surface.

Les mesures peuvent être réalisées depuis de larges bandes spectrales jusqu'à des domaines monochromatiques où il est nécessaire que chacun des moyens de focalisation de sortie des rayonnements séparés soit précédé par des moyens de filtrage interférentiels.

De préférence, les moyens de focalisation comportent des doubles achromatiques.

Les moyens de conversion rapide comprennent avantageusement deux convertisseurs analogique-numérique de type flash. Les moyens d'adaptation du niveau d'amplification comprennent, de préférence pour chaque signal Vr ou Vb, un circuit multiplexeur une voie vers au moins deux voies recevant le signal et le délivrant à l'un de au moins deux circuits d'amplification de gain différent dont les sorties sont reliées à un circuit démultiplexeur de deux voies au moins vers une voie, un seul des circuits d'amplification étant sélectionné à chaque calcul du rapport Vr/Vb. Le circuit de traitement peut aussi comporter des moyens de conversion numérique-analogique placés en sortie du processeur de signal et destinés à obtenir une valeur analogique de la température mesurée.

Le circuit de détection comporte deux détecteurs quantiques du type InGaAs. Ces détecteurs transforment le rayonnement qu'ils reçoivent en un courant électrique proportionnel à la puissance de ce rayonnement.

Les moyens de mémorisation comprennent une mémoire rapide de type flash qui est bien adaptée à un processeur de type DSP.

Le circuit de traitement numérique peut être remplacé par un circuit comportant un diviseur analogique recevant les signaux Vr et Vb et délivrant le rapport Vr/Vb pour un convertisseur analogique-numérique dont la sortie est reliée à un circuit mémoire comprenant une table de valeur T=f(Vr/Vb) et délivrant la température T mesurée.

La sonde de mesure comporte un barreau de saphir recouvert d'une fine couche protectrice et dont l'extrémité en regard de la fibre comporte une calotte sphérique focalisant dans la fibre la quasi totalité du rayonnement émis. L'autre extrémité de la sonde de mesure recevant le rayonnement peut comporter une calotte hémisphérique dont le rayon est déterminé selon la distance à la surface.

Dans le cas particulier de la mesure des gaz, l'extrémité de la sonde de mesure est recouverte d'un revêtement conférant une émission thermique de type corps noir. Ce revêtement est constitué d'une première couche fortement émissive, et d'une deuxième couche opaque à la lumière et fortement conductrice. Il peut également être pourvu d'une couche intermédiaire placée entre les première et seconde couches et assurant une optimisation de la diffusion de la chaleur et une homogénéisation de la température. Si ces couches optimisent l'émission et le transfert thermique, elles permettent également d'assurer la tenue thermomécanique et chimique de la sonde en fonction de son environnement (milieu réducteur ou oxydant).

La présente invention concerne également un procédé de mesure de température d'un gaz ou d'une surface en mouvement par la détermination et le traitement d'un rayonnement thermique caractéristique de cette surface ou de ce gaz utilisant le pyromètre bichromatique précité et comportant les étapes suivantes:

1) capter un rayonnement thermique caractéristique de la témpérature de la surface ou du gaz,
2) séparer ce rayonnement en deux rayonnements de bandes de spectrales distinctes,
3) convertir ces deux rayonnements en deux tensions de couleur Vr et Vb,
4) estimer les ordres de grandeur des tensions de couleur Vr et vb afin d'adapter le gain d'un circuit d'amplification de ces tensions,
5) calculer leur rapport Vr/Vb, et
6) extraire la valeur correspondante de la température T mesurée d'une table de conversion T=f(Vr/Vb) déterminée préalablement par étalonnage.

BREVE DESCRIPTION DES DESSINS

D'autres caractéristiques et avantages de la présente invention ressortiront mieux de la description suivante, faite à titre indicatif et non limitatif, en regard des dessins annexés, sur lesquels:

- la figure 1 est un schéma de principe du pyromètre rapide selon l'invention,
- les figures 2a et 2b montrent deux exemples de réalisation du bloc optique utilisé dans le pyromètre de la figure 1,
- la figure 3 montre un premier exemple de réalisation de l'ensemble de traitement des signaux mis en oeuvre dans le pyromètre de la figure 1,
- la figure 4 montre un second exemple de réalisation de l'ensemble de traitement des signaux mis en oeuvre dans le pyromètre de la figure 1,

- la figure 5 montre un exemple préférentiel de réalisation de l'ensemble de traitement des signaux mis en oeuvre dans le pyromètre de la figure 1,
- la figure 6 illustre un premier détail de réalisation de l'ensemble de la figure 5,
- la figure 7 illustre un second détail de réalisation de l'ensemble de la figure 5,
- la figure 8 est un organigramme montrant le fonctionnement de l'ensemble de traitement des signaux de la figure 5, et
- les figures 9 et 10 illustrent des exemples de réalisation de sondes pouvant être utilisés dans le pyromètre de la figure 1.

DESCRIPTION DETAILLEE DE MODES DE REALISATION

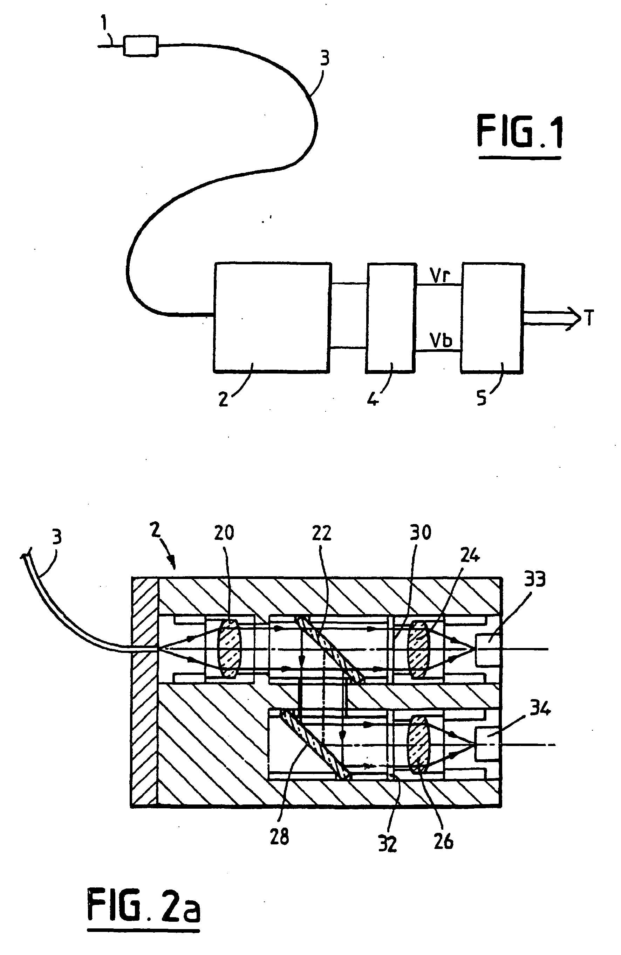

Le pyromètre de l'invention est illustré schématiquement sur la figure 1. Il comporte une sonde ou capteur optique 1 placé en regard d'un corps chaud, ou dans un milieu gazeux, dont la température est à mesurer et qui est relié à un bloc optique 2 par l'intermédiaire d'une fibre optique unique 3. Un circuit de détection placé en sortie du bloc optique, ou de préférence intégré à ce bloc, permet une conversion des signaux optiques qu'il délivre en signaux électriques exploitables par un ensemble de traitement 5 (après éventuellement conversion et adaptation par un circuit de conversion 4) qui génère alors la valeur de la température recherchée.

La configuration du pyromètre présenté est bichromatique, c'est à dire que le rayonnement thermique émis par la surface du corps chaud ou le gaz (la sonde de mesure comportant alors un revêtement faisant office de micro-corps noir) est mesuré sur deux bandes spectrales distinctes. Il est ainsi possible de limiter les causes d'erreurs correspondant aux pertes en transmissions et couplage du rayonnement (courbures, connectiques, salissures) qui affectent directement la mesure dans le cas d'une analyse monochromatique. Par contre, une structure bichromatique exige de séparer le rayonnement sortant de la fibre en deux parties. C'est l'objet du bloc optique 2 dont la structure matérielle est maintenant décrite plus précisément en regard de la figure 2a.

Ce bloc optique 2 comporte en entrée des moyens de collimation d'entrée 20 destinés à transmettre parallèlement le rayonnement issu de la fibre 3 vers des moyens de séparation de ce faisceau en deux parties constitués par une lame dichroïque 22 qui joue également un rôle de filtre passe-haut en transmission et passe-bas en réflexion. Les faisceaux quittant cette lame sont ensuite dirigés, directement ou par l'intermédiaire d'un miroir 28, vers des moyens de sélection spectrale (spectres rouge et bleu) comprenant des filtres interférentiels 30, 32. Des moyens de focalisation de sortie 24, 26 placés en sortie de ces filtres permettent de concentrer les rayonnements séparés sur des détecteurs quantiques 33, 34, de préférence à arséniure de gallium indium (In Ga As). Le bloc optique ainsi réalisé est particulièrement compact et présente des performances élevées. En effet, d'une part les niveaux de signal disponibles en entrée des détecteurs quantiques (photovoltaïques) sont supérieurs aux niveaux de signal qui pourraient être recueillis en sortie d'un cube séparateur et d'autre part la lame dichroïque n'est pas sensible à la polarisation et n'introduit pas d'aberrations en cas d'éventuelle mauvaise convergence du rayonnement. Le gain sur chacun des flux lumineux quittant la lame, par rapport à un dispositif avec cube séparateur, est de 100%. Il est ainsi possible soit d'utiliser une fibre de plus faible diamètre pour la mesure d'une même température, soit d'étendre la plage de température mesurée notamment vers les basses températures. Il peut être noté que dans le cas de mesures à large bande spectrale (300 à 400 nanomètres), les filtres interférentiels 30, 32 peuvent avantageusement être omis. Il peut aussi être noté que l'utilisation de doublets optiques achromatiques au niveau des moyens de focalisation permet de plus d'obtenir une résolution spatiale optimum autorisant le recours à des détecteurs à faible surface.

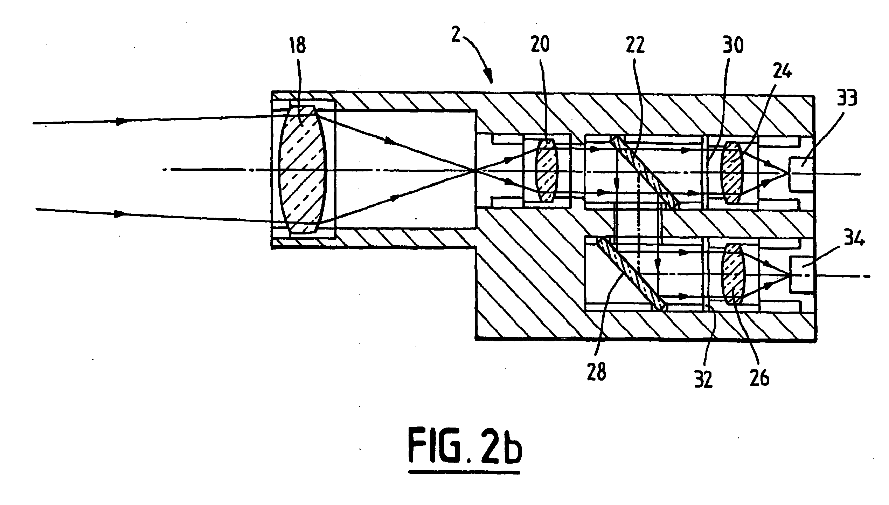

La figure 2b montre un second exemple de réalisation du bloc optique. En effet, il peut être noté que pour certaines applications dans lesquelles un déport de la mesure n'est pas nécessaire, la mesure peut être effectuée directement à partir du bloc optique 2 en munissant celui-ci de moyens permettant une visée pyrométrique. Ces moyens comprennent des moyens de focalisation d'entrée 18 qui captent le rayonnement et le focalisent au foyer des moyens de collimation d'entrée 20, le flux lumineux se dirigeant ensuite, comme précédemment, vers les moyens de séparation 22 et aboutissant aux détecteurs 33, 34.

Les courants électriques délivrés par les détecteurs photovoltaïques sont transformés en tension et normalisés dans le circuit de conversion courant-tension 4 qui pour des raisons d'amélioration du rapport signal/bruit peut avantageusement être intégré au bloc optique.

Les tensions de couleur délivrées par ce circuit au niveau de chacune des deux voies de mesure seront référencées Vr (tension de rouge) et Vb (tension de bleu).

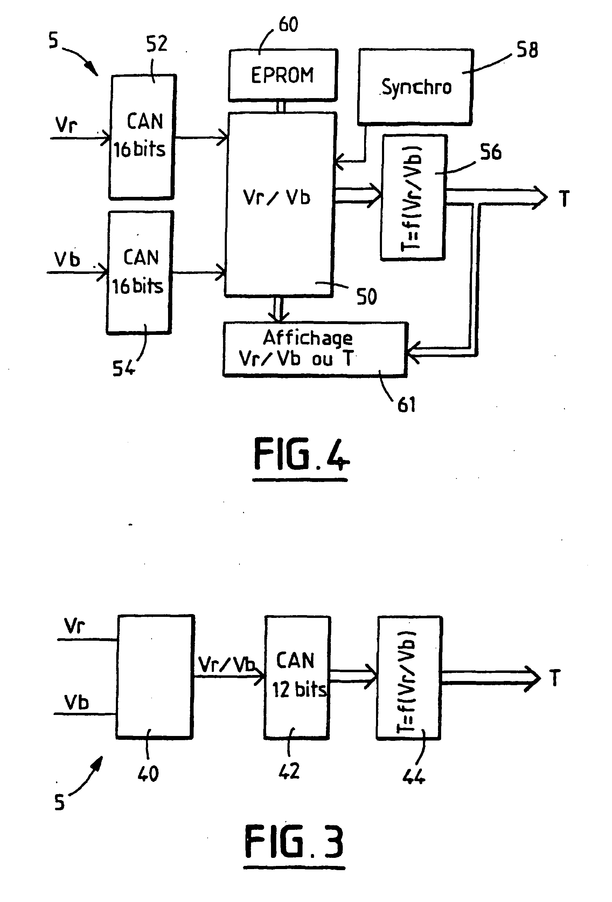

Le traitement des signaux Vr et Vb à partir desquels la température T à mesurer est déterminée est effectué dans le circuit de traitement 5 dont différents exemples de réalisation sont montrés aux figures 3 à 5, les architectures des figures 3 et 4 n'étant pas revendiquées en tant que telles.

Sur la figure 3, ce circuit comporte une architecture simplifiée à la fois analogique et numérique particulièrement adaptée à des cadences de mesure faibles (de l'ordre de 1000 mesures par seconde). Les tensions Vr et Vb sont dirigées vers un diviseur analogique 40 qui établit le rapport Vr/ Vb et le délivre à un convertisseur analogique-numérique 42 dont la sortie est reliée à un circuit mémoire 44 comportant une table de conversion T= f (Vr/Vb) et délivrant la valeur de la température T correspondant au rapport calculé en sortie du convertisseur.

Au contraire, sur la figure 4, ce circuit de traitement comporte une architecture entièrement numérique organisée autour d'un ensemble numérique de calcul à microprocesseur 50 qui reçoit les tensions Vr et Vb issues des détecteurs et numérisées par des convertisseurs analogique-numérique 52, 54 et qui délivre après calcul une valeur numérique égale au rapport de Vr/Vb pour des moyens de mémorisation 56 desquels est extraite directement, comme précédemment, la température T mesurée. Un module de synchronisation 58 relié à l'ensemble de calcul 50 assure le déclenchement du processus de mesure sous la commande d'un logiciel de gestion emmagasiné dans une mémoire morte 60 avantageusement programmable et effaçable (EPROM). Un module d'affichage 62 permet la visualisation de la température T mais aussi celle du rapport Vr/Vb.

Afin de permettre des cadences de mesure très rapides (jusqu'à 110 000 mesures par seconde), les convertisseurs ont une résolution de 16 bits et comportent des temps de conversion de l'ordre de la microseconde. Le rapport Vr/Vb est calculé en temps réel par l'ensemble de calcul numérique 50 et est utilisé comme pointeur pour extraire la valeur de la température des moyens de mémorisation qui comporte comme précédemment une table de valeurs (table de conversion) donnant la température T pour chaque rapport de Vr/Vb.

Dans le cas du pyromètre bichromatique de l'invention, la valeur de la température est donnée par la formule suivante:

$$T = A \, / \, (\log(Vr/Vb) + B)$$

Vr et Vb étant les deux tensions de couleur (rouge et bleu) délivrées par les détecteurs et A et B deux constantes déterminées par un étalonnage préalable.

Or, le calcul en temps réel de T à partir de Vr et Vb, s'il ne présente pas de difficultés particulières pour des cadences de mesure faibles et peut être réalisé par une technologie classique analogique ou numérique, devient un réel problème quant il s'agit de l'effectuer à des cadences plus importantes. En effet, les techniques analogiques deviennent très complexes au delà d'un temps de réponse de 1 ms et demandent le recours à des circuits spéciaux qui s'avèrent très sensibles d'utilisation. Quant aux techniques numériques, le calcul d'un logarithme voire la réalisation de plusieurs divisions demandent des temps d'exécution conséquents qui s'avèrent incompatibles avec des cadences de mesure très élevées.

Aussi, la présente invention a résolu ce problème en ayant recours à la table de conversion T= f(Vr/Vb) comportant un ensemble de valeurs déterminées préalablement et remises à jour à chaque modification des constantes A et B obtenues lors d'étalonnages. En effet, les signaux Vr et Vb évoluent dans des proportions très importantes alors que le rapport Vr/Vb reste au contraire inclus dans un domaine assez réduit qu'il est facile de couvrir entièrement avec une table de conversion de taille raisonnable. Ainsi, en prenant toutes les valeurs du rapport Vr/Vb comprises entre 0,3 et 2,6 par pas de $10^{-3}$, on obtient une table ayant comme variable d'entrée le rapport Vr/Vb et comme variable de sortie la température T et pouvant être emmagasinée dans une mémoire de 2048 mots. Le processus de mesure de la température se résume alors au simple calcul du rapport des tensions de couleur Vr/Vb et au pointage dans une mémoire contenant cette table de conversion de la valeur de la température correspondante. Bien évidemment, cette solution originale peut aussi être employée pour des cadences plus faibles comme l'a montré l'exemple de réalisation de la figure 3.

Le calcul du rapport Vr/Vb est effectué au niveau de l'ensemble de calcul 50 qui comporte avantageusement un circuit spécialisé dans le traitement des signaux numériques comme un processeur de signal (Digital Signal Processor) par exemple, lequel permet d'effectuer des opérations sur 48 voire 56 bits.

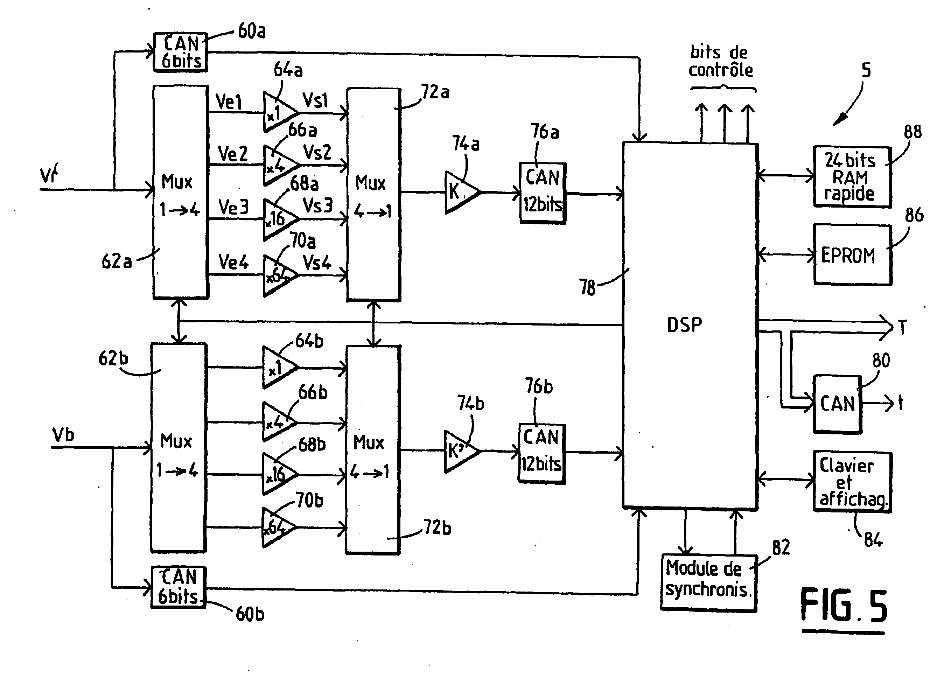

La figure 5 montre un exemple de réalisation préférentielle du circuit de traitement 5. Les signaux Vr et Vb issus des deux voies de mesure et délivrés par les circuits détecteurs 33, 34 constituent chacun des signaux d'entrée pour d'une part un convertisseur analogique-numérique rapide 60a; 60b et d'autre part un circuit multiplexeur une voie vers au moins deux voies (avantageusement quatre voies) 62a; 62b dont chacune des sorties est reliée à un circuit d'amplification 64a, 66a, 68a, 70a; 64b, 66b, 68b, 70b, chaque circuit ayant un facteur d'amplification (gain) distinct, de préférence choisi dans les rapports 1, 4, 16, et 64. Les signaux délivrés par ces circuits d'amplification sont dirigés vers un circuit démultiplexeur au moins deux voies (avantageusement quatre voies) vers une voie 72a, 74b dont la sortie est reliée à un adaptateur de niveau 74a; 74b qui délivre une tension d'entrée pour un convertisseur analogique-numérique 76a; 76b. Les sorties des deux convertisseurs sont reliées à une unité de calcul numérique, un processeur de signal 78, qui assure la gestion et le contrôle de l'ensemble des circuits du circuit de traitement et génère la valeur numérique T de la température mesurée. Un convertisseur numérique-analogique 80 permet éventuellement de disposer de cette température sous une forme analogique. Le circuit de traitement 5 comporte également reliés au processeur 78 un module de synchronisation 82, un ensemble d'entrée et de sortie de données (sous la forme d'un clavier et d'un afficheur) 84, une mémoire morte 86 et une mémoire vive rapide (de type flash) 88.

Le déclenchement du processus de mesure est assuré par le module de synchronisation 82 sous la commande d'un logiciel de gestion emmagasiné dans la mémoire morte 86 avantageusement programmable et effaçable (EPROM). Ce processus débute par une conversion rapide mais grossière, par exemple sur simplement 6 bits, réalisée par les convertisseurs rapides 60a, 60b, afin d'estimer les ordres de grandeur des tensions de couleur Vr et Vb. A partir des valeurs obtenues, le processeur 78 détermine le gain le plus adapté (1, 4, 16 ou 64) sur chacune des deux voies de mesure (cette détermination est effectuée en temps réel pour chaque point de mesure), permettant ainsi une réduction de la dynamique des signaux. L'étage d'adaptation 74a, 74b permet de calibrer les signaux délivrés par les circuits d'amplification sélectionnés pour bénéficier de la totalité de la résolution du convertisseur analogique-numérique 76a, 76b qui effectue la conversion de préférence sur au moins 12 bits. Les valeurs de Vr et Vb numérisées servent au calcul du rapport Vr/Vb exécuté par l'unité de traitement arithmétique et logique du processeur 78.

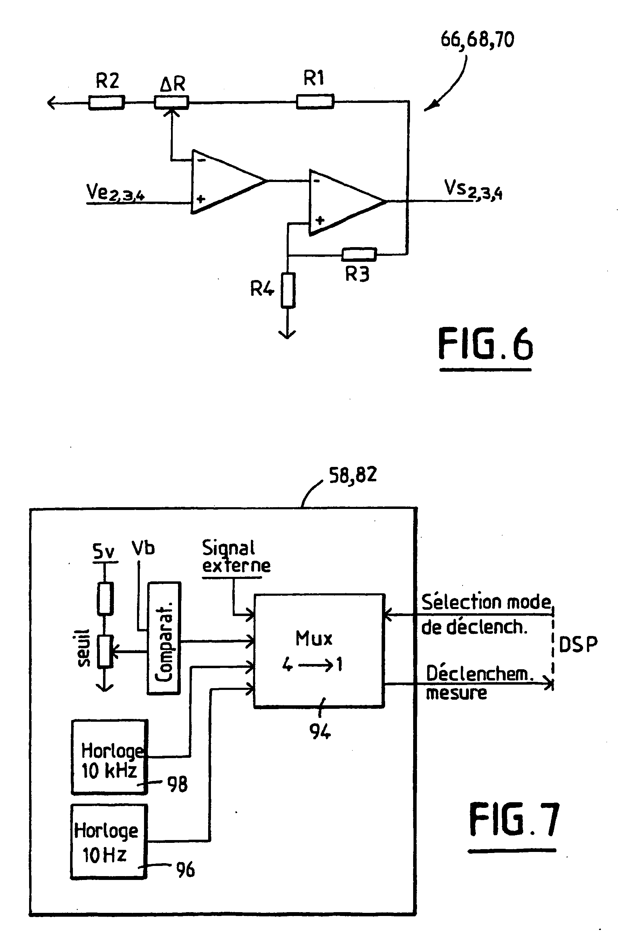

Un exemple de réalisation des circuits d'amplification de gain 4, 16 ou 64, le circuit d'amplification de gain unité étant réalisé classiquement par un simple amplificateur opérationnel monté en suiveur de tension, est illustré sur la figure 6. L'étage d'entrée est constitué d'un amplificateur opérationnel à transistors à effet de champs (TEC) 90 permettant d'obtenir un courant d'offset très faible et variant peu avec la température. La faiblesse de la bande passante et du taux de variation maximum de sa tension de sortie (slew-rate) de cet amplificateur à TEC est compensée par la présence à sa sortie d'un second amplificateur opérationnel à transistors bipolaires 92 qui possède au contraire une bande passante et un slew-rate très élevés. Le signal Ve issu du circuit multiplexeur 62a; 62b est dirigé vers l'entrée non-inverseuse du premier amplificateur 90, son entrée inverseuse étant reliée au point milieu d'un potentiomètre ajustable ΔR dont les deux extrémités sont reliées respectivement à une extrémité d'une première résistance R1 dont l'autre extrémité est reliée à la sortie du second amplificateur 92 et à une extrémité d'une seconde résistance R2 dont l'autre extrémité est reliée à un potentiel de référence positif. La sortie du premier amplificateur constitue l'entrée inverseuse du second amplificateur dont l'entrée non-inverseuse est bouclée sur la sortie de ce second amplificateur par une troisième résistance R3 et reliée à un potentiel de référence négatif au travers d'une quatrième résistance R4. En choisissant le rapport des résistances R3/R4 égal à celui des résistances R1/R2, le gain de cet ensemble d'amplification est alors donné simplement par le rapport de R1/R2.

Le module de synchronisation 58, 82 chargé de déclencher le processus de mesure par l'activation de l'interruption correspondante du processeur 50, 78 est représenté sur la figure 7. Ce module comporte un circuit multiplexeur quatre voies vers une voie 94 qui reçoit respectivement sur chacune de ses quatre entrées: un signal extérieur, les signaux de sortie de deux circuits d'horloge 96, 98 de fréquence 10 et 10000 Hz et le signal de sortie d'un comparateur 99 recevant en entrée d'une part le signal Vb et d'autre part une tension de seuil prédéterminée. La sélection de l'un ou l'autre de ces signaux est réalisée depuis le processeur de signal 78 qui génère ainsi quatre modes de synchronisation distincts: un mode lent pour l'étalonnage dans lequel les constantes A et B et les valeurs de Vr et Vb sont entrées manuellement au clavier (dans ce mode, la fréquence de mesure est avantageusement de quelques Hz, par exemple 10 Hz et la bande passante sur chaque voie est alors limitée) et trois modes rapides qui diffèrent par le principe de déclenchement de la mesure. Dans un mode de synchronisation externe, le calcul de la température est déclenché par un signal logique extérieur, ce calcul pouvant alors être exécuté jusqu'à 110 000 fois par seconde. Dans un mode de synchronisation interne, le calcul est déclenché par le signal Vb dès que celui-ci dépasse le seuil prédéterminé de tension. Dans un mode de synchronisation à fréquence fixe, le calcul est déclenché 10 000 fois par seconde. Bien évidemment, les différentes fréquences mentionnées précédemment sont données à titre purement indicatif et il est possible en les modifiant d'adapter le pyromètre selon l'invention à un très grand nombre de situations. Par exemple, le pyromètre est capable de caractériser des phénomènes ayant des périodicités naturelles (des aubes de turbines par exemple) comme des processus présentant des variations a priori quelconques.

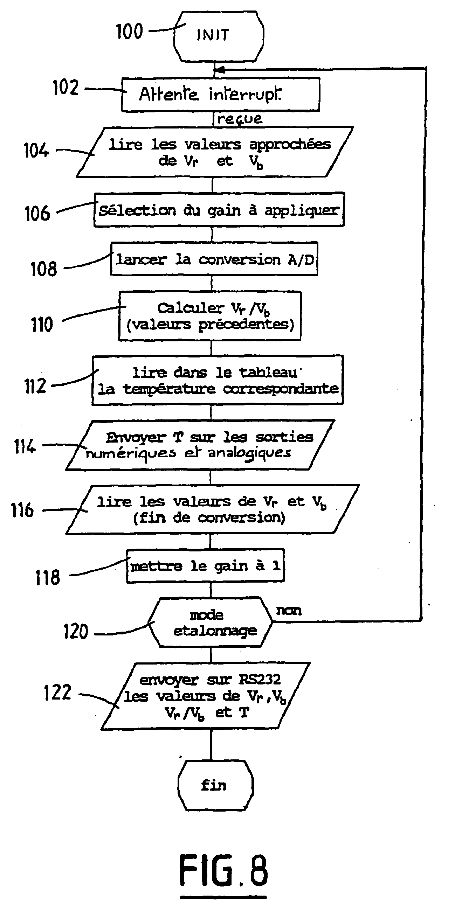

Les différentes étapes de calcul de la température à partir des tensions de couleur Vr et Vb sont maintenant décrites en regard de la figure 8.

Après une initialisation réalisée dans une première étape 100, le processeur se met en attente, dans une étape 102, d'un signal d'interruption qui peut être généré par le module de synchronisation 82 (fonction calcul de la température) ou par le circuit de gestion de l'affichage et du clavier 84 (fonction étalonnage).

Lorsque cette interruption résulte du module de synchronisation, dans une étape 104, le processeur lit les valeurs de tension Vr, Vb délivrées par les convertisseurs rapides 60a, 60b puis, à l'étape 106, il sélectionne le gain le mieux adapté à la conversion analogique-numérique qu'il lance dans une étape 108. Parallèlement, dans une étape 110, il procède au calcul du rapport Vr/Vb (sur les valeurs résultant de la conversion précédente). A l'étape suivante 112, il lit dans la table de conversion la valeur de la température correspondante et, dans l'étape 114, cette valeur T est envoyée sur une sortie numérique ou adressée au convertisseur 80 qui en délivre l'équivalent analogique t sur sa sortie. A la fin de la conversion, à l'étape 116, les valeurs Vr et Vb sont lues par le processeur et sauvegardées pour le calcul à venir et le gain est remis à 1 durant l'étape suivante 118. Selon le mode de fonctionnement sélectionné à l'étape 120 (mode calcul/mode étalonnage), le processus soit revient dans l'état d'attente initial (étape 102) soit adresse les valeurs de T et de Vr/Vb au circuit de gestion de l'affichage 84.

Au contraire, si l'interruption résulte du circuit de gestion du clavier 84, il est procédé à une analyse du message entré et l'action correspondante est ensuite exécutée. Il peut s'agir d'un changement de mode ou bien d'un étalonnage avec modification des paramètres A et B. Cette action terminée, le processeur revient dans son état initial d'attente d'une nouvelle interruption en provenance du clavier ou du module de synchronisation.

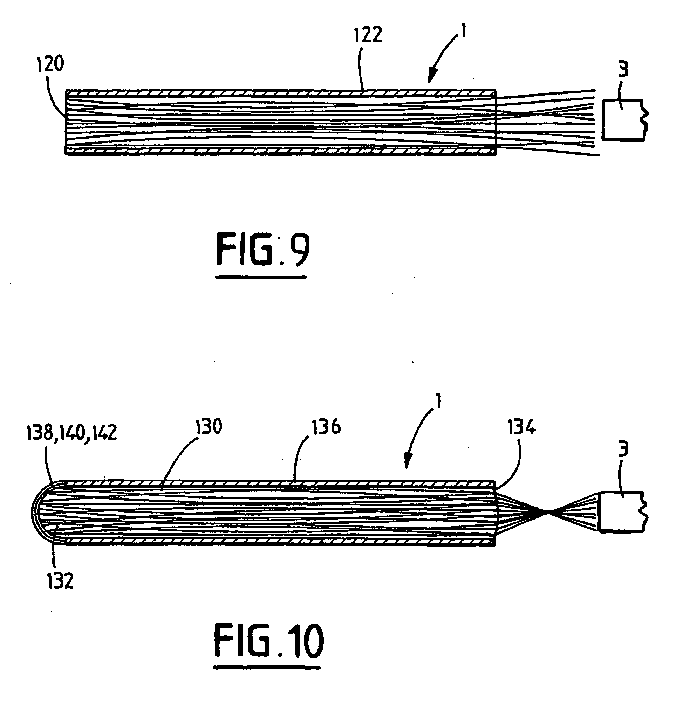

Les figures 9 et 10 illustrent deux architectures possibles pour la sonde de mesure 1. De conception simple, ces sondes utilisent une fibre optique classique 120, sans aucun dispositif de focalisation, qui est alors placée en regard de la surface dont la température est à mesurer, cette surface pouvant être mise en température simplement par le déplacement d'un gaz venant l'effleurer. Une telle fibre est par exemple une fibre multimode à saut d'indice en silice/silice (coeur/gaine). La fibre transparente est avantageusement recouverte d'une couche mince 122 d'un matériau opaque qui lui assure une protection thermique et mécanique suffisante mais spécifique à chaque application (dépôt d'un matériau réfractaire par projection plasma par exemple). La fibre-sonde est reliée à la fibre de transmission 3 par un raccord non représenté. Dans une version plus élaborée, la sonde est constituée par un barreau cylindrique en saphir 130 dont la face d'exposition au rayonnement peut être réalisée sous la forme d'une calotte hémisphérique 132 dont le rayon varie de façon déterminée en fonction de l'application envisagée. Bien entendu, une face simplement perpendiculaire peut aussi être envisagée. La face de sortie du saphir en regard avec la fibre est avantageusement réalisée sous la forme d'une calotte sphérique 134 qui permet une focalisation de pratiquement la quasi totalité du flux devant être véhiculé dans la fibre 3 (maximisation du couplage optique avec la fibre). Cette solution qui évite le recours à une lentille dont le positionnement est toujours délicat est particulièrement fiable compte tenu du petit nombre de pièces mis en jeu. Elle présente aussi l'intérêt d'un faible coût et celui de conserver les qualités intrinsèques du barreau de saphir. Comme précédemment, la surface externe du barreau comporte une protection thermique et mécanique 136.

En outre, dans la version représentée sur la figure 10, destinée à la mesure des gaz plus particulièrement aux hautes températures, la calotte hémisphérique 132 est recouverte de différentes couches ayant pour objet de créer à l'extrémité libre du saphir un revêtement conférant une émission thermique de type corps noir. Ces couches dont l'épaisseur totale n'excède pas 10 à 15 $\mu$m (notamment pour l'obtention d'une bonne réponse temporelle) optimisent d'une part l'émission et le transfert thermique et d'autre part la tenue thermomécanique et chimique de la sonde en fonction de son environnement (milieu réducteur ou oxydant). Chaque couche a une fonction spécifique ; une première couche 138 fortement émissive, et une deuxième couche 142 opaque et fortement conductrice. Deux couches suffisent, toutefois une couche intermédiaire 140 peut être ajoutée pour optimiser la diffusion de la chaleur et ainsi homogénéiser la température.

Le pyromètre bichromatique rapide selon l'invention est susceptible d'être utilisé dans toutes les étapes de développement et d'exploitation des turbomoteurs:

- en phase de développement, la connaissance des températures d'aubes permet par exemple d'étudier les échanges entre le gaz et la turbine ou les différentes méthodes de refroidissement, et
- en phase de fonctionnement, la détection d'anomalie est facilitée par le suivi précis de l'évolution de la température.

Sa rapidité le prédispose en outre pour un emploi dans de nombreux secteurs de pointe. Par exemple, la mesure de particules en mouvement rapide dans des écoulements gazeux tels que des lits fluidisés ou des jets plasmas. Par exemple encore, les traitement de surfaces par irradiations très brèves à l'aide de faisceaux intenses (laser, rayonnement solaire concentré,...).

Ce pyromètre peut donc permettre la connaissance de données expérimentales très complètes sur des phénomènes encore peu étudiés car hors de portée de l'instrumentation classique.

## Revendications

1. Pyromètre bichromatique rapide destiné à la mesure de la température T d'un gaz ou d'une surface en mouvement, comportant :

   . une sonde de mesure (1) placée en regard de la surface ou immergée dans le gaz et captant un rayonnement thermique caractéristique de la température de cette surface ou de ce gaz,
   . une fibre optique unique (3) reliée à la sonde de mesure et transmettant ce rayonnement,
   . un bloc optique (2) relié à la fibre optique et recevant ce rayonnement, ce bloc optique comprenant des moyens de collimation d'entrée (20) pour transmettre en totalité ce rayonnement, des moyens de séparation formés d'une lame dichroïque (22) pour séparer le rayonnement transmis selon deux bandes spectrales distinctes, et des moyens de focalisation de sortie (24,26) pour concentrer les rayonnements séparés,
   . un circuit de détection quantique (2, 4) recevant ces rayonnements séparés et assurant leur conversion en deux tensions de couleur Vr, Vb, et
   . un circuit de traitement (5) recevant ces signaux de tension et comprenant des moyens de conversion analogique-numérique (52, 54; 76a, 76b), un processeur de traitement du signal (DSP 50, 78) calculant à partir de ces valeurs numériques un rapport Vr/Vb et des moyens de mémorisation (56, 88) munis d'une table de valeurs prédéterminées par étalonnage T= f (Vr/Vb) et délivrant en sortie, à partir du rapport calculé, la température T de la surface ou du gaz, le circuit de traitement (5) comportant en outre des moyens de conversion rapide (60a, 60b) des valeurs Vr et Vb afin d'estimer leur ordre de grandeur et des moyens d'adaptation du niveau d'amplification des signaux Vr et Vb selon les ordres de grandeur délivrés au processeur par les moyens de conversion rapide.

2. Pyromètre bichromatique rapide destiné à la mesure de la température T d'une surface, comportant :

. un bloc optique (2) placé en regard de la surface, captant un rayonnement thermique émis par cette surface et caractéristique de sa température, et comprenant des moyens de focalisation d'entrée (18) recevant le rayonnement émis et le focalisant au foyer de moyens de collimation d'entrée (20) pour transmettre en totalité le rayonnement reçu, des moyens de séparation formés d'une lame dichroïque (22) pour séparer ce rayonnement selon deux bandes spectrales distinctes, et des moyens de focalisation de sortie (24, 26) pour concentrer les rayonnements séparés,
. un circuit de détection quantique (2, 4) recevant ces rayonnements séparés et assurant leur conversion en deux tensions de couleur Vr, Vb, et
. un circuit de traitement (5) recevant ces signaux de tension et comprenant des moyens de conversion analogique-numérique (52, 54; 76a, 76b), un processeur de traitement du signal (DSP 50, 78) calculant, à partir de ces valeurs numériques, un rapport Vr/Vb et des moyens de mémorisation (56, 88) munis d'une table de valeurs prédéterminées par étalonnage T= f (Vr/Vb) et délivrant en sortie, à partir du rapport calculé, la température T de la surface, le circuit de traitement (5) comportant en outre des moyens de conversion rapide (60a, 60b) des valeurs Vr et Vb afin d'estimer leur ordre de grandeur et des moyens d'adaptation du niveau d'amplification des signaux Vr et Vb selon les ordres de grandeur délivrés au processeur par les moyens de conversion rapide.

3. Pyromètre bichromatique rapide selon la revendication 1 ou la revendication 2, **caractérisé en ce que** chacun des moyens de focalisation de sortie (24, 26) des rayonnements séparés est précédé par des moyens de filtrage interférentiels (30, 32).

4. Pyromètre bichromatique rapide selon la revendication 1 ou la revendication 2, **caractérisé en ce que** les moyens de focalisation (18, 24, 26) comportent des doublets achromatiques.

5. Pyromètre bichromatique rapide selon la revendication 1 ou la revendication 2, **caractérisé en ce que** les moyens de conversion rapide comprennent deux convertisseurs analogique-numérique de type flash.

6. Pyromètre bichromatique rapide selon la revendication 1 ou la revendication 2, **caractérisé en ce que** les moyens d'adaptation comprennent, pour chaque signal Vr ou Vb, un circuit multiplexeur une voie vers au moins deux voies (62a; 62b) recevant le signal et le délivrant à l'un de au moins deux circuits d'amplification de gain différent (64a, 66a, 68a, 70a; 64b, 66b, 68b, 70b) dont les sorties sont reliées à un circuit démultiplexeur de deux voies au moins vers une voie (72a; 72b), un seul des circuits d'amplification étant sélectionné à chaque calcul du rapport Vr/Vb.

7. Pyromètre bichromatique rapide selon la revendication 1 ou la revendication 2, **caractérisé en ce que** le circuit de traitement (5) comporte en outre des moyens de conversion numérique-analogique (80) placés en sortie du processeur de signal et destinés à obtenir une valeur analogique de la température mesurée.

8. Pyromètre bichromatique rapide selon la revendication 1 ou la revendication 2, **caractérisé en ce que** le circuit de détection comporte deux détecteurs quantiques (33, 34) du type InGaAs.

9. Pyromètre bichromatique rapide selon la revendication 1 ou la revendication 2, **caractérisé en ce que** les moyens de mémorisation comprennent une mémoire rapide de type flash.

10. Pyromètre bichromatique rapide selon la revendication 1 ou la revendication 2, **caractérisé en ce que** le circuit de traitement (5) est remplacé par un circuit comportant un diviseur analogique (40) recevant les signaux Vr et Vb et délivrant le rapport Vr/Vb pour un convertisseur analogique-numérique (42) dont la sortie est reliée à un circuit mémoire (44) comprenant une table de valeur T=f(Vr/Vb) et délivrant la température T mesurée.

11. Pyromètre bichromatique rapide selon la revendication 1, **caractérisé en ce que** la sonde de mesure comporte un barreau de saphir (130) recouvert d'une fine couche protectrice (136) et dont l'extrémité en regard de la fibre (3) comporte une calotte sphérique (134) focalisant dans la fibre la quasi-totalité du rayonnement émis.

12. Pyromètre bichromatique rapide selon la revendication 1, **caractérisé en ce que** l'extrémité de la sonde de mesure recevant le rayonnement de la surface comporte une calotte hémisphérique (132) dont le rayon est déterminé selon la distance à la surface.

13. Pyromètre bichromatique rapide selon la revendication 1 ou la revendication 12, plus particulièrement destiné à la mesure de la température des gaz, **caractérisé en ce qu'**une extrémité de la sonde de mesure recevant le rayonnement est recouverte d'un revêtement conférant une émission thermique de type corps noir.

14. Pyromètre bichromatique rapide selon la revendication 13, **caractérisé en ce que** ledit revêtement est constitué d'une première couche (138) fortement émissive et d'une deuxième couche (142) opaque à la lumière et fortement conductrice.

15. Pyromètre bichromatique rapide selon la revendication 14, **caractérisé en ce que** le revêtement comporte en outre une couche intermédiaire (140) placée entre les première et seconde couches (138, 142) et assurant une optimisation de la diffusion de la chaleur et une homogénéisation de la température.

16. Procédé de mesure de température d'un gaz ou d'une surface en mouvement par la détermination et le traitement d'un rayonnement thermique caractéristique de la température de cette surface ou de ce gaz, utilisant le pyromètre bichromatique rapide selon la revendication 1, **caractérisé en ce qu'**il comporte les étapes suivantes:

> 1) capter un rayonnement thermique caractéristique de la température de la surface ou du gaz,
> 2) séparer ce rayonnement en deux rayonnements de bandes spectrales distinctes,
> 3) convertir ces deux rayonnements en deux tensions de couleur Vr et Vb,
> 4) estimer les ordres de grandeur des tensions de couleur Vr et Vb afin d'adapter le gain d'un circuit d'amplification de ces tensions,
> 5) calculer leur rapport Vr/Vb, et
> 6) extraire la valeur correspondante de la température T mesurée d'une table de conversion T=f(Vr/Vb) déterminée préalablement par étalonnage.

**Claims**

1. A fast bichromatic pyrometer for measuring the temperature T of a gas or of a moving surface, the pyrometer comprising:

> · a measurement probe (1) placed facing the surface or immersed in the gas and picking up thermal radiation that is characteristic of the temperature of said surface or of said gas;
> · a single optical fibre (3) connected to the measurement probe and transmitting said radiation;
> · an optical block (2) connected to the optical fibre and receiving said radiation, the optical block including inlet collimation means (20) for transmitting all of said radiation, separation means formed by a dichroic slide (22) for separating the transmitted radiation into two distinct spectral bands, and outlet focusing means (24, 26) for concentrating the separated bands of radiation;
· a quantum detection circuit (2, 4) receiving said separated bands of radiation and converting them into two colour voltages Vr, Vb; and
· a treatment circuit (5) receiving the voltage signals and including analog-to-digital conversion means (52, 54; 76a, 76b), a digital signal processor (DSP 50, 78) for calculating the ratio Vr/Vb from these digital values, and memory means (56, 88) provided with a table of predetermined values of T = f(Vr/Vb) as obtained by calibration and delivering at its output, on the basis of the calculated ratio, the temperature T of the surface or of the gas, the treatment circuit (5) further including fast conversion means (60a, 60b) for converging the values Vr and Vb so as to estimate their orders of magnitude and means for matching the amplification levels of the signals Vr and Vb as a function of the orders of magnitude delivered to the processor by the fast conversion means.

2. A fast bichromatic pyrometer for measuring the temperature T of a surface and comprising:

> · an optical block (2) placed facing the surface, picking up thermal radiation emitted by said surface and characteristic of its temperature, and comprising inlet focusing means (18) that receive the emitted radiation and focus it on the focus of inlet collimation means (20) for transmitting all of the received radiation, separation means formed by a dichroic slide (22) for separating said radiation into two distinct spectral bands, and outlet focusing means (24, 26) for concentrating the separated bands of radiation;
> · a quantum detection circuit (2, 4) receiving said separated bands of radiation and converting them into two colour voltages Vr, Vb; and
> · a treatment circuit (5) receiving the voltage signals and including analog-to-digital conversion means (52, 54; 76, 76b), a digital signal processor (DSP 50, 78) for calculating the ratio Vr/Vb from these digital values, and memory means (56, 88) provided with a table of predetermined values of T = f(Vr/Vb) as obtained by calibration and delivering at its output, on the basis of the calculated ratio, the temperature T of the surface, the treatment circuit (5) further including fast conversion means (60a, 60b) for converging the values Vr and Vb so as to estimate their orders of magnitude and means for matching the amplification levels of the signals Vr and Vb as a function of the orders of magnitude delivered to the processor by the fast conversion means.

3. A fast bichromatic pyrometer according to claim 1 or claim 2, **characterised in that** each of the outlet focusing means (24, 26) for the separated bands of radiation is preceded by interference filter means (30, 32).

4. A fast bichromatic pyrometer according to claim 1 or claim 2, **characterised in that** the focusing means (18, 24, 26) comprise achromatic doublets.

5. A fast bichromatic pyrometer according to claim 1 or claim 2, **characterised in that** the fast conversion means comprise two flash type analog-to-digital converters.

6. A fast bichromatic pyrometer according to claim 1 or claim 2, **characterised in that** the means for adapting the amplification levels comprise, for each signal Vr or Vb, a multiplexer circuit having one input and at least two outputs (62a; 62b) receiving the signal and delivering it to one of at least two amplification circuits of different gains (64a, 66a, 68a, 70a; 64b, 66b, 68b, 70b) whose outputs are connected to a multiplexer circuit having at least two inputs and one output (72a; 72b), a single amplification circuit being selected for each calculation of the ratio Vr/Vb.

7. A fast bichromatic pyrometer according claim 1 or claim 2, **characterised in that** the treatment circuit (5) further includes digital-to-analog conversion means (80) placed at the output from the signal processor and designed to obtain an analog value of the measured temperature.

8. A fast bichromatic pyrometer according claim 1 or claim 2, **characterised in that** the detection circuit includes two quantum detectors (33, 34) of the InGaAs type.

9. A fast bichromatic pyrometer according to claim 1 or claim 2, **characterised in that** the memory means comprise a flash type fast memory.

10. A fast bichromatic pyrometer according to claim 1 or claim 2, **characterised in that** the treatment circuit (5) is replaced by a circuit comprising an analog divider (40) receiving the signals Vr and Vb and delivering the ratio Vr/Vb to an analog-to-digital converter (42) whose output is connected to a memory circuit (44) that contains a table of values T = f(Vr/Vb) and that delivers the measured temperature T.

11. A fast bichromatic pyrometer according to claim 1, **characterised in that** the measurement probe comprises a sapphire bar (130) covered in a fine protective layer (136) and whose end facing the fibre (3) includes a spherical cap (134) focusing substantially all of the emitted radiation into the fibre.

12. A fast bichromatic pyrometer according to claim 1, **characterised in that** the end of the measurement probe that receives radiation from the surface includes a hemispherical cap (132) whose radius is determined as a function of the distance to the surface.

13. A fast bichromatic pyrometer according claim 1 or claim 12, more particularly intended for measuring the temperature of gases, **characterised in that** the end of the measurement probe that receives the radiation is covered in a coating which confers black body type thermal emission thereto.

14. A fast bichromatic pyrometer according claim 13 **characterised in that** said coating is constituted by a first layer (138) that is highly emissive and by a second layer (142) that is opaque to light and that is highly conductive.

15. A fast bichromatic pyrometer according claim 14 **characterised in that** the coating further includes an intermediate layer (140) placed between the first and second layers (138, 142) and optimising heat diffusion and making temperature uniform.

16. A method of measuring the temperature of a gas or of a moving surface by determining and treating thermal radiation characteristic of the temperature of said surface or of said gas which uses the fast bichromatic pyrometer according claim 1, the method comprising the following steps:

1) picking up thermal radiation characteristic of the temperature of the surface or of the gas;
2) separating said radiation into two distinct spectrum bands of radiation;
3) converting the two bands of radiation into two colour voltages Vr and Vb;
4) estimating the orders of magnitude of colour voltages Vr and Vb in order to match the gain of an amplification circuit for said voltages;
5) calculating the ratio thereof Vr/Vb; and
6) extracting the corresponding value of the measured temperature T from a conversion table T = f(Vr/Vb) that has previously been determined by calibration.

**Patentansprüche**

1. Schnelles bichromatisches Pyrometer, das zur Messung der Temperatur T eines Gases oder einer Oberfläche in Bewegung geeignet ist, aufweisend:

- einen Meßfühler (1), welcher der Oberfläche gegenüber angeordnet oder in das Gas eingetaucht ist und eine für die Temperatur dieser Oberfläche oder dieses Gases charakteristische thermische Strahlung auffängt,

- eine optische Einzelfaser (3), die mit dem Meßfühler verbunden ist und diese Strahlung übermittelt,

- eine optische Baugruppe (2), die mit der optischen Faser verbunden ist und diese Strahlung empfängt, wobei diese optische Baugruppe Eingangs-Kollimationsmittel (20) zum Übertragen dieser Strahlung in der Gesamtheit, Mittel zum Zerlegen, die von einem dichroitischen Plättchen (22) gebildet werden, zum Zerlegen der übertragenen Strahlung in zwei verschiedene Spektralbanden, und Ausgangs-Fokussierungsmittel (24, 26) zum Bündeln der zerlegten Strahlungen enthält,

- ein Quantenerfassungselement (2, 4), das diese zerlegten Strahlungen empfängt und ihre Umwandlung in zwei Spannungen der Farbe Vr, Vb sicherstellt,

- ein Verarbeitungselement (5), das diese Spannungssignale empfängt, und das Analog-Digital-Umwandlungsmittel (52, 54; 76a, 76b), einen Signalverarbeitungs-Prozessor (DSP 50, 78), der ausgehend von diesen numerischen Werten ein Vr/Vb-Verhältnis berechnet, und Speichermittel (56, 88) enthält, die mit einer Tabelle von durch Eichen vorbestimmten Werten T=f(Vr/Vb) ausgestattet sind und am Ausgang, ausgehend von dem berechneten Verhältnis, die Temperatur T der Oberfläche oder des Gases liefern,

- wobei das Verarbeitungselement (5) außerdem Mittel (60a, 60b) zur schnellen Umwandlung der Werte Vr und Vb zur Abschätzung ihrer Größenordnung aufweist und

- wobei das Verarbeitungselement (5) außerdem Mittel zur Anpassung der Verstärkungsstufe der Signale Vr und Vb gemäß den von den schnellen Wandlern an den Prozessor gelieferten Größenordnungen aufweist.

2. Schnelles bichromatisches Pyrometer, das zur Messung der Temperatur T einer Oberfläche geeignet ist, aufweisend:

- eine gegenüber der Oberfläche angeordnete optische Baugruppe (2), die eine thermische Strahlung, welche von dieser Oberfläche emittiert wird und für ihre Temperatur charakteristisch ist, auffängt, und die Eingangs-Fokussierungsmittel (18), welche die emittierte Strahlung empfangen und im Brennpunkt der Eingangs-Kollimationsmittel (20) fokussieren, zum Übertragen der empfangenen Strahlung in der Gesamtheit, Mittel zum Zerlegen, die von einem dichroitischen Plättchen (22) gebildet werden, um diese Strahlung in zwei verschiedene Spektralbanden zu zerlegen, und Ausgangs-Fokussierungsmittel (24, 26) zum Bündeln der zerlegten Strahlungen enthält,

- ein Quantenerfassungselement (2, 4), das diese zerlegten Strahlungen empfängt und ihre Umwandlung in zwei Spannungen der Farbe Vr, Vb sicherstellt, und

- ein Verarbeitungselement (5), das diese Spannungssignale empfängt, und das Analog-Digital-Umwandlungsmittel (52, 54; 76a, 76b), einen Signalverarbeitungs-Prozessor (DSP 50, 78), der ausgehend von diesen numerischen Werten ein Vr/Vb-Verhältnis berechnet, und Speichermittel (56,88), die mit einer Tabelle von durch Eichung vorbestimmten Werten T=f(Vr/Vb) ausgestattet sind und am Ausgang, ausgehend von dem berechneten Verhältnis, die Temperatur T der Oberfläche liefern, enthält.

3. Schnelles bichromatisches Pyrometer nach Anspruch 1 oder 2, **dadurch gekennzeichnet, daß** jedes der Ausgangs-Fokussierungsmittel (24, 26) der zerlegten Strahlungen vorgeschaltete Interferenzfiltermittel (30, 32) hat.

4. Schnelles bichromatisches Pyrometer nach Anspruch 1 oder 2, **dadurch gekennzeichnet, daß** die Fokussierungsmittel (18, 24, 26) achromatische Zweilinser aufweisen.

5. Schnelles bichromatisches Pyrometer nach Anspruch 1 oder 2, **dadurch gekennzeichnet, daß** die Mittel zur schnellen Umwandlung zwei Analog-Digital-Wandler vom Blitztyp enthalten.

6. Schnelles bichromatisches Pyrometer nach Anspruch 1 oder 2, **dadurch gekennzeichnet, daß** die Mittel zur Anpassung für jedes Signal Vr oder Vb ein Multiplexer-Element, das einen Kanal in mindestens zwei Kanäle aufteilt (62a;62b), welches das Signal empfängt und es an eines von mindestens zwei Verstärkerelementen verschiedener Verstärkung (64a, 66a, 68a 70a; 64b, 66b, 68b, 70b) liefert, deren Ausgänge mit einem Demultiplexer-Element, das mindestens zwei Kanäle zu einem Kanal vereinigt (72a; 72b), verbunden sind, enthalten, wobei für jede Berechnung des Verhältnisses Vr/Vb ein einziges der Verstärkerelemente ausgewählt wird.

7. Schnelles bichromatisches Pyrometer nach Anspruch 1 oder 2, **dadurch gekennzeichnet, daß** das Verarbeitungselement (5) außerdem Digital-Analog-Umwandlungsmittel (80), die am Ausgang des Signalprozessors angeordnet und dazu geeignet sind, einen analogen Wert der gemessenen Temperatur zu erhalten, aufweist.

**8.** Schnelles bichromatisches Pyrometer nach Anspruch 1 oder 2, **dadurch gekennzeichnet, daß** das Erfassungselement zwei Quantendetektoren (33, 34) vom InGaAs-Typ aufweist.

**9.** Schnelles bichromatisches Pyrometer nach Anspruch 1 oder 2, **dadurch gekennzeichnet, daß** die Speichermittel zum Speichern einen schnellen Speicher vom Flashtyp enthalten.

**10.** Schnelles bichromatisches Pyrometer nach Anspruch 1 oder 2, **dadurch gekennzeichnet, daß** das Verarbeitungselement (5) ersetzt ist durch ein Element, das einen analogen Teiler (40) aufweist, der die Signale Vr und Vb empfängt und das Verhältnis Vr/Vb für einen Analog-Digital-Wandler (42) liefert, dessen Ausgang mit einem Speicherelement (44) verbunden ist, welches eine Tabelle des Wertes T=f(Vr/Vb) enthält und die gemessene Temperatur T liefert.

**11.** Schnelles bichromatisches Pyrometer nach Anspruch 1, **dadurch gekennzeichnet, daß** der Meßfühler einen Saphir-Stab (130), der mit einer dünnen Schutzschicht (136) bedeckt ist, und dessen der Faser (3) gegenüberliegen des Ende eine kugelförmige Kappe (134) aufweist, die in der Faser fast die Gesamtheit der emittierten Strahlung fokussiert, aufweist.

**12.** Schnelles bichromatisches Pyrometer nach Anspruch 1, **dadurch gekennzeichnet, daß** das Ende des Meßfühlers, das die Strahlung der Oberfläche empfängt, eine halbkugelförmige Kappe (132) aufweist, deren Radius entsprechend dem Abstand von der Oberfläche festgelegt ist.

**13.** Schnelles bichromatisches Pyrometer nach Anspruch 1 oder 12, das insbesondere geeignet ist zur Messung der Temperatur von Gasen, **dadurch gekennzeichnet, daß** ein Ende des Meßfühlers, das die Strahlung empfängt, mit einer Beschichtung bedeckt ist, die ihm eine thermische Ausstrahlung vom Typ schwarzer Körper verleiht.

**14.** Schnelles bichromatisches Pyrometer nach Anspruch 13, **dadurch gekennzeichnet, daß** die Beschichtung aus einer stark emittierenden ersten Schicht (138) und einer zweiten Schicht (142), die lichtundurchlässig und stark leitfähig ist, besteht.

**15.** Schnelles bichromatisches Pyrometer nach Anspruch 14, **dadurch gekennzeichnet, daß** die Beschichtung außerdem eine Zwischenschicht (140) aufweist, die zwischen der ersten und der zweiten Schicht (138, 142) angeordnet ist und eine Optimierung der Wärme-Diffusion und eine Vergleichmäßigung der Temperatur sicherstellt.

**16.** Verfahren zur Messung der Temperatur eines Gases oder einer Oberfläche in Bewegung durch die Bestimmung und Verarbeitung einer thermischen Strahlung, die für die Temperatur dieser Oberfläche oder dieses Gases charakteristisch ist, unter Verwendung des schnellen bichromatischen Pyrometers nach Anspruch 1, **dadurch gekennzeichnet, daß** es die folgenden Schritte aufweist:

1) Auffangen einer thermischen Strahlung, die für die Temperatur der Oberfläche oder des Gases charakteristisch ist,
2) Zerlegen dieser Strahlung in zwei Strahlungen unterschiedlicher Spektralbanden,
3) Umwandeln dieser zwei Strahlungen in zwei Spannungen der Farbe Vr und Vb,
4) Abschätzen der Größenordnungen der Spannungen der Farbe Vr und Vb, um die Verstärkung eines Verstärkungselements dieser Spannungen anzupassen,
5) Berechnen ihres Verhältnisses Vr/Vb, und
6) Entnehmen des der gemessenen Temperatur T entsprechenden Werts aus einer Umrechnungstabelle T=f(Vr/Vb), die vorher durch Eichung bestimmt wurde.

EP 0 708 317 B2

# FIG.1

Vr

Vb

T

1

3

2  4  5

# FIG.2a

3  2  20  22  30  24  33

28  32  26  34

13

**FIG. 2b**

14

## FIG.4

## FIG.3

FIG.5

EP 0 708 317 B2

66,68,70

R2    ΔR         R1

$Ve_{2,3,4}$                              $Vs_{2,3,4}$

R4         R3

## FIG.6

58,82

5v    Vb    Signal
              externe

seuil    Comparat.    Mux
                       4 ⟶ 1

Sélection mode,
de déclench.        DSP

Déclenchem.
mesure

94

Horloge
10 kHz    98

Horloge
10 Hz    96

## FIG.7

100 — INIT

102 — Attente interrupt.
reçue

104 — lire les valeurs approchées
de $V_r$ et $V_b$

106 — Sélection du gain à appliquer

108 — lancer la conversion A/D

110 — Calculer $V_r / V_b$
(valeurs précedentes)

112 — lire dans le tableau
la température correspondante

114 — Envoyer T sur les sorties
numériques et analogiques

116 — lire les valeurs de $V_r$ et $V_b$
(fin de conversion)

118 — mettre le gain à 1

120 — mode etalonnage — non

122 — envoyer sur RS232
les valeurs de $V_r$, $V_b$
$V_r / V_b$ et T

fin

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 216458 A
- WO 9103715 A